# EUROPÄISCHE PATENTSCHRIFT

(11) **EP 0 601 469 B1**
(45) Veröffentlichungstag und Bekanntmachung des Hinweises auf die Patenterteilung: **06.11.1996**
(21) Anmeldenummer: 93119397.3
(22) Anmeldetag: 01.12.1993
(51) Int. Cl.: B65G 45/08, F16G 13/06

(54) **Büchsenförderkette**
Bush conveyor chain
Chaîne transporteuse à douilles

(30) Priorität: 11.12.1992 DE 4241758
(43) Veröffentlichungstag der Anmeldung: 15.06.1994
(73) Patentinhaber: FIRMA ERICH WULF UND SOHN GmbH & Co. KG, D-59889 Eslohe (DE)
(72) Erfinder: Stiesberg, Reinhard, D-57413 Finnentrop (DE)
(74) Vertreter: Fritz, Herbert, Dipl.-Ing.

(56) Entgegenhaltungen:
- EP-A- 0 094 110
- EP-A- 0 257 661
- EP-A- 0 326 725
- FR-A- 2 519 324

## Beschreibung

Die Erfindung bezieht sich auf eine Büchsenförderkette mit den Merkmalen nach dem Oberbegriff des Anspruchs 1 (siehe z.B. FR-A-2 519 324).

Der einwandfreie Betrieb von Büchsenförderketten dieser Art hängt davon ab, daß an der Gelenkstelle einerseits zwischen Büchse und Rolle und andererseits zwischen Büchse und Bolzen ständig Schmiermittel vorhanden ist. Da bei den Büchsenförderketten nach dem Stand der Technik während des Betriebs mit Verlusten an Schmiermittel gerechnet werden muß, erfordert dies eine fortlaufende Betriebsschmierung und damit verbunden Kosten für die Wartung, sowie Probleme bei der Entsorgung der Schmiermittel.

Die Aufgabe der Erfindung ist darin zu sehen, eine Büchsenförderkette so auszubilden, daß der Aufwand für die Wartung gegenüber dem Stand der Technik erheblich vermindert wird.

Diese Aufgabe wird durch die Merkmale nach dem Anspruch 1 gelöst. Der Anspruch 2 hat die Anwendung dieser Lösung an einer anderen Gelenkstelle der Büchsenförderkette zum Inhalt.

Nach der Lösung des Anspruchs 1 sind spezielle Dichtungselemente eingebaut, welche seitlich einer jeden Kettenrolle, die mit Schmiermittel gefüllten Räume abdichten. Die zylindrischen Schmiermittelräume werden an jeder Seite der Rolle fortgesetzt durch ebene Schmiermittelräume, so daß das Schmiermittel auch an die Stirnseiten der Rolle gelangen kann. Diese seitlichen Schmiermittelräume sind an jeder Seite begrenzt durch den ebenen Schenkel eines auf die Büchse fest aufgepreßten Deckels. Daran liegt elastisch eine Lippe eines unter Vorspannung in eine Nut der Rolle eingesetzten Dichtungsrings, so daß dadurch auch bei Toleranzen eine Abdichtung bewirkt wird, die das Austreten von Schmiermittel verhindert. Ein zylindrischer Schenkel des Deckels schützt dabei mechanisch den elastischen Dichtungsring und verhindert das Eindringen von Schmutz.

Das Dichtungskonzept nach der Erfindung stellt somit eine Kombination einer Labyrinthdichtung und einer schleifenden Dichtung dar, d.h. zwei Dichtungssysteme werden vereint eingesetzt in Form einer Doppeldichtung. Sie verhindert zuverlässig das Eindringen von Fremdpartikeln und Feuchtigkeit, sowie das Austreten von Erstschmiermittel aus den Gelenken, wobei trotzdem eine Nachschmierung der Gelenke über einen Schmiernippel im Kettenbolzen möglich ist. Ein notwendiges radiales sowie axiales Spiel der Kette wird ohne Minderung der Dichtwirkung ausgeglichen. Der Dichtungsring mit Lippe besteht aus einem vollelastischen Werkstoff. Für den Deckel verwendet man einen Werkstoff mit hoher Oberflächengüte im Dichtungsbereich. Der Deckel wird bei der Montage zusammen mit der Kettenlasche auf den Bolzen bzw. auf die Büchse gepreßt. Die Schlüsselflächen auf Bolzen und Büchse ergeben dabei die nötige Verdrehungssicherung des Deckels.

Die Erfindung bezieht sich weiter auf eine Abdichtung der Schmiermittelräume an den Gelenkflächen zwischen Bolzen und Büchse. Zusammen mit den Maßnahmen nach Anspruch 1 entsteht ein universeller Schutz der Kettengelenke. Zur Aufnahme des elastischen Dichtungsringes für die Abdichtung zwischen Büchse und Bolzen sowie Rolle und Büchse ist am Endbereich der Büchse bzw. in der Nut ein Absatz vorgesehen, dessen Länge so gewählt ist, daß der Dichtungsring nicht zerstört wird. Das axiale Spiel von Rolle, Büchse und Bolzen ist so gewählt, daß der Vorspannweg der Dichtung nicht überschritten wird.

Im folgenden wird ein Ausführungsbeispiel der Erfindung beschrieben unter Bezugnahme auf die beiliegenden Zeichnungen.
- Fig. 1: zeigt eine Draufsicht auf eine Büchsenförderkette nach der Erfindung im Bereich eines Kettengelenkes;
- Fig. 2: ist ein Schnitt nach II-II von Fig. 1;
- Fig. 3 und 4: stellen die Abdichtungselemente nach III von Fig. 2 in unterschiedlichen Positionen dar.

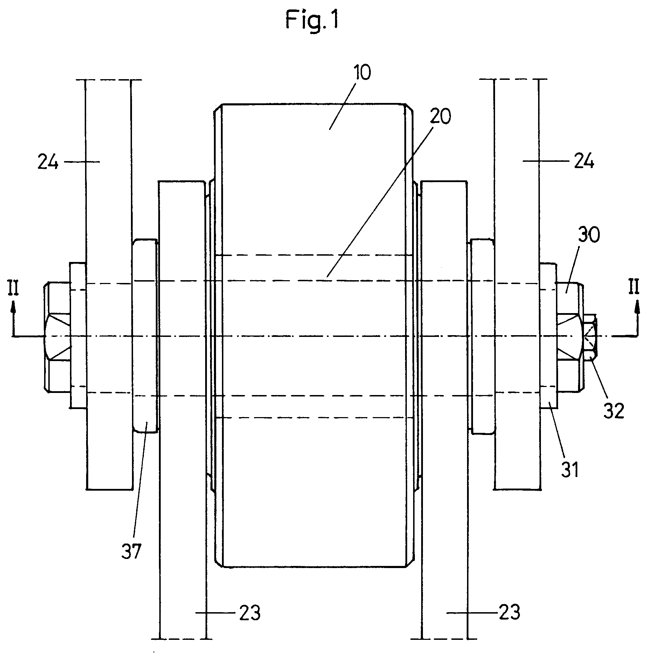

Zunächst wird auf Fig. 1 Bezug genommen. Die Büchsenförderkette besteht aus in Reihe angeordneten Rollen 10, jede drehbar gelagert auf einer Büchse 20. Diese nimmt drehbar einen Bolzen 30 auf. An jeder Seite der Rolle 10 ist eine innere Lasche 23 gelagert, fest auf die Büchse 20 aufgepreßt. Die inneren Laschen 23 verbinden zwei Rollen zu einem Rollenpaar (Innenglied).

An jeder Seite ist außerdem eine äußere Lasche 24 angeordnet, fest auf dem Bolzen aufgepreßt. Zwei äußere Laschen 24 verbinden jeweils gelenkig zwei Rollenpaare (Außenglied). Zwischen jeder inneren Lasche 23 und einer äußeren Lasche 24 ist ein Deckel 37 eingesetzt, der die Elemente schützt, welche zur Abdichtung der mit Fett oder Öl gefüllten Räume vorgesehen sind. Für die Zuführung von Schmiermittel sind überdies im Bolzen Kanäle vorgesehen. Die Zuführung des Schmiermittels erfolgt über einen Schmiernippel 32. Durch auf den Bolzen aufgesteckte Sicherungsringe 31 ist die axiale Position der Gelenklaschen gesichert.

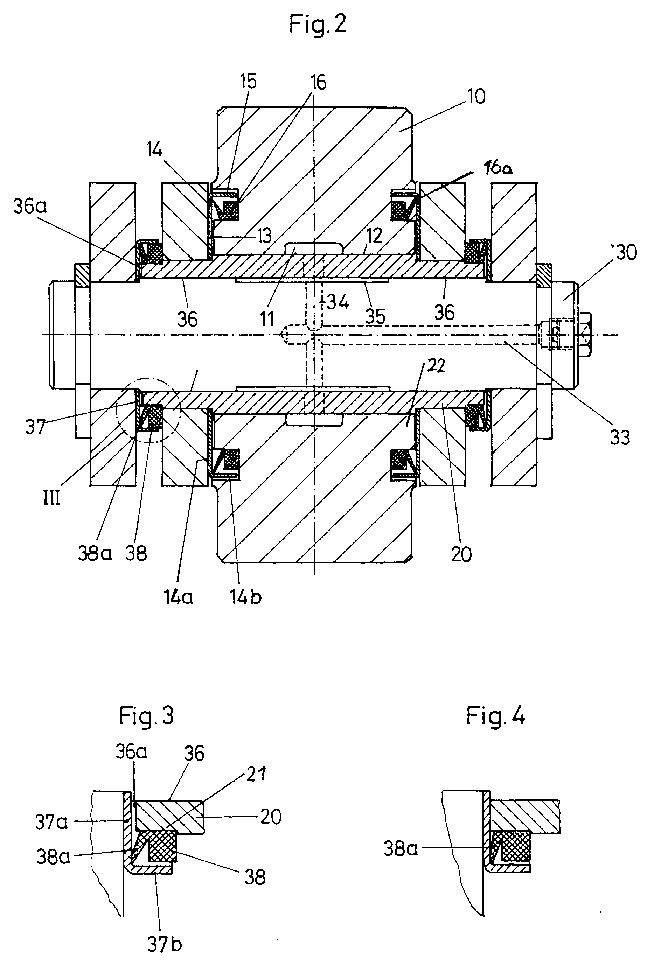

Im folgenden wird auf Fig. 2 Bezug genommen. Hier erkennt man den axialen Schmiermittelkanal 33 im Bolzen 30 von dem radiale Schmiermittelkanäle 34 abgehen, welche zum Schmiermittelraum 35 führen. Dieser ist mit Schmiermittel gefüllt zur Schmierung der zylindrischen Schmierfläche 36 zwischen Bolzen und Büchse 20. Das Schmiermittel kann außerdem über radiale Kanäle in der Büchse 20 in einen zylindrischen Schmiermittelraum 11, der in der Rolle 10 gebildet ist, gelangen. Das Schmiermittel im Raum 11 als Schmiermittelreserve dient zur Schmierung der zylindrischen Schmierfläche 12 zwischen Büchse und Rolle.

Diese zylindrische Schmiermittelfläche 12 ist an jeder Seite der Rolle fortgesetzt durch eine seitliche, also ebene Schmierfläche 13. Der diesbezügliche Schmiermittelraum ist begrenzt an jeder Seite durch einen Deckel 14, der fest auf die Büchse 20 aufgepreßt ist und der mit einem zylindrischen Schenkel 14b in eine umlaufende Nut 15 in der Rolle 10 hineinragt. In diese Nut ist auf dem Ansatz 22 unter Vorspannung ein elastischer Dichtungsring 16 mit quadratischem oder rechteckigem Querschnitt eingesetzt. An diesem Dichtungsring ist eine Lippe 16a angeformt derart, daß sie ständig elastisch am ebenen Schenkel 14a des Deckels 14 anliegt. Dadurch ist der mit Schmiermittel gefüllte Raum zwischen Rolle 10 und dem ebenen Schenkel 14a des Deckels 14 abgesperrt. Durch den zylindrischen Schenkel 14b des Deckels ist der Dichtungsring 16 vor Verschmutzung oder Beschädigung geschützt.

Um den Vorrat des Schmiermittels, das zur Schmierung zwischen Bolzen und Büchse dient, zu vergrößern, ist gleichfalls am Bolzen ein Schmiermittelraum 35 gebildet von dem aus das Schmiermittel in die zylindrische Schmierfläche 36 gelangen kann. Das Schmiermittel kann aber auch an die Stirnseite der Büchse 20 gelangen, wo ein seitlicher Schmiermittelraum 36a gebildet ist, begrenzt einerseits durch die Stirnfläche der Büchse 20 und durch den ebenen Schenkel 37a eines Deckels 37, der fest auf den Bolzen aufgepreßt ist. Auf einem Absatz der Büchse ist unter Vorspannung auch hier ein elastischer Dichtungsring 38 aufgebracht mit einer Lippe 38a, die zur Absperrung des Schmiermittelraumes 36a elastisch am Deckel 37 anliegt.

Fig. 3 stellt in vergrößertem Maßstab den Dichtungsbereich III nach Fig. 2 dar. Man erkennt aus Fig. 3, daß die Dichtungslippe 38a auch dann elastisch anliegt und ihre Sperrwirkung ausübt, wenn zwischen Deckel und Büchse in axialer Richtung ein maximales Spiel entstanden ist. Auch durch ein Spiel in radialer Richtung wird die Dichtwirkung nicht beeinträchtigt.

Fig. 4 zeigt die Stellung der Dichtungselemente bei minimalen Spiel zwischen Büchse und Deckel.

## Patentansprüche

1. Büchsenförderkette mit den Merkmalen:
- sie hat in Reihe hintereinander angeordnete Rollen (10), die drehbar auf einer Büchse (20) gelagert sind, wobei diese drehbar auf einem Bolzen (30) gelagert ist;
- an jeder Seite der Rolle ist eine innere Lasche (23) angeordnet, fest auf die Büchse aufgepreßt, wobei die beiden Laschen zwei Rollen zu einem Paar verbinden;
- neben den inneren Laschen sind zwei äußere Laschen (24) angeordnet, fest auf den Bolzen gepreßt, die jeweils ein Rollenpaar gelenkig verbinden;
- zwischen Rolle und Büchse einerseits und zwischen Büchse und Bolzen andererseits sind zylindrische Schmiermittelflächen bzw. Räume (11, 12, 35, 36) vorgesehen;
gekennzeichnet durch die nachfolgend genannten Merkmale:
- die zylindrischen Schmierflächen (12) zwischen Büchse (20) und Rolle (10) sind an jeder Seite durch eine seitliche Schmierfläche (13) fortgesetzt, begrenzt durch eine Stirnfläche der Rolle und durch einen ebenen Schenkel (14a) eines auf die Büchse fest aufgepreßten Deckels (14), dessen zylindrischer Schenkel (14b) in eine an der Rolle (10) gebildeten Nut (15) hineinragt;
- ein Ansatz (22) in der Nut nimmt unter Vorspannung einen elastischen Dichtungsring (16) auf, mit einer am Deckel elastisch anliegenden Lippe (16a).

2. Büchsenförderkette nach dem Oberbegriff des Anspruchs 1 oder nach Anspruch 1, gekennzeichnet durch die nachfolgend genannten Merkmale:
- die zylindrischen Schmierflächen (36) zwischen Büchse (20) und Bolzen (30) sind seitlich fortgesetzt durch stirnseitige Schmierflächen (36a), jeweils begrenzt durch einen ebenen Schenkel (37a) eines auf den Bolzen aufgepreßten Deckels (37);
- auf den Endbereich der Büchse (20) ist unter Vorspannung ein elastischer Dichtungsring (38) aufgebracht, mit einer elastisch am Deckel (37) anliegenden Lippe (38a);
- der elastische Dichtungsring (38) ist von einem zylindrischen Schenkel (37b) des Deckels abgedeckt.

3. Büchsenförderkette nach Anspruch 2, dadurch gekennzeichnet, daß der elastische Dichtungsring (38) von einem Ansatz (21) der Büchse aufgenommen ist.

4. Büchsenförderkette nach Anspruch 1 oder 2, dadurch gekennzeichnet, daß in der Rolle (10) und im Bolzen (30) Schmiermittelräume (11, 35) gebildet sind, und daß im Bolzen ein axialer Schmiermittelkanal (33) und abzweigend radiale Schmiermittelkanäle (34) gebildet sind, welche zu den Schmiermittelräumen führen.

## Claims

1. Bush conveyor chain comprising the features:
- it has rollers (10) arranged in series one behind the other which are mounted rotatably on a bush (20), the latter being rotatably mounted on a pin (30);
- at each side of the roller there is arranged an inner fishplate (23) and firmly pressed onto the bush, the two fishplates connecting two rollers so as to form a pair;
- besides the inner fishplates there are arranged two outer fishplates (24) and firmly pressed onto the pin, which connect in each case a pair of rollers in a flexible manner;
- between the roller and the bush on the one hand, and between the bush and the pin on the other hand, there are provided cylindrical lubrication faces or spaces (11, 12, 35, 36);
characterised by the following features:
- the cylindrical lubrication faces (12) between the bush (20) and the roller (10) are on each side extended by a lateral lubrication face (13), limited by a front face of the roller and by a plane leg (14a) of a cover (14) firmly pressed on the bush, the cylindrical leg (14b) of said cover extending into a groove (15) formed at the roller (10);
- an extension (22) provided in the groove accommodates under pretension a resilient sealing ring (16) with a lip (14a) resiliently resting against the cover.

2. Bush conveyor chain as claimed in the introductory part of claim 1 or in claim 1, characterised by the following features:
- the cylindrical lubrication faces (36) between the bush (20) and the pins (30) are laterally extended by frontal lubrication faces (36a), each limited by a plane leg (37a) of a cover (37) pressed onto the pin;
- a resilient sealing ring (38) is applied with pretension to the end region of the bush, said ring having a lip (38a) resiliently resting against the cover (37);
- the resilient sealing ring (38) is covered by a cylindrical leg (37b) of the cover.

3. Bush conveyor chain as claimed in claim 2, characterised in that the resilient sealing ring (38) is accommodated by an extension (21) of the bush.

4. Bush conveyor chain as claimed in claim 1 or 2, characterised in that in the roller (10) and in the pin (30) there are formed lubrication spaces (11, 35), and that in the pin there are formed an axial lubrication channel (34) and branching off radial lubrication channels (34) which lead to the lubrication spaces.

## Revendications

1. Chaîne transporteuse à douilles ayant les caractéristiques suivantes:
- elle comprend des rouleaux (10) disposés les uns derrière les autres, montés à rotation sur une douille (20), cette dernière étant montée à rotation sur un tourillon (30);
- de chaque côté du rouleau est disposée une patte intérieure (23) fixée à ajustement pressé sur la douille, les deux pattes réunissant deux rouleaux en une paire;
- à côté des pattes intérieures sont disposées deux pattes extérieures (24) fixées à ajustement pressé sur le tourillon, pattes qui réunissent à articulation une paire de rouleaux;
- entre le rouleau et la douille d'une part, et entre la douille et le tourillon d'autre part sont prévues des surfaces ou enceintes cylindriques (11, 12, 35, 36) pour le lubrifiant de graissage;
caractérisée par les caractéristiques ci-après énumérées:
- les surfaces de graissage cylindriques (12) entre la douille (20) et le rouleau (10) sont de chaque côté prolongées par une surface de graissage latérale (13), bornée par une face frontale du rouleau et par une aile plane (14a) d'un couvercle (14) appliqué à ajustement pressé sur la douille, couvercle dont l'aile cylindrique (14b) s'engage dans une rainure (15) formée dans le rouleau (10);
- un épaulement (22) dans la rainure reçoit sous précontrainte une bague d'étanchéité élastique (16), dotée d'une lèvre (16a) appliquée élastiquement sur le couvercle.

2. Chaîne transporteuse à douilles suivant le préambule de la revendication 1 ou suivant la revendication 1,
caractérisée par les caractéristiques énumérées ci-après:
- les surfaces de graissage cylindriques (36) entre la douille (20) et le rouleau (30) sont prolongées latéralement par des surfaces de graissage frontales (36a), bornées chacune par une aile plane (37a) d'un couvercle (37) fixé à ajustement pressé sur le tourillon;
- sur la portion terminale de la douille est monté sous précontrainte une bague d'étanchéité élastique (38) dotée d'un lèvre (38a) appliquée élastiquement sur le couvercle (37);
- la bague d'étanchéité élastique (38) est recouverte par une aile cylindrique (37b) du couvercle.

3. Chaîne transporteuse à douilles suivant la revendication 2,
caractérisée en ce que la bague d'étanchéité élastique (38) est reçue par un épaulement (21) de la douille.

4. Chaîne transporteuse à douilles suivant la revendication 1 ou la revendication 2,
caractérisée en ce que dans le rouleau (10) et dans le tourillon (30) sont formées des enceintes pour lubrifiant (11, 35), et en ce que dans le tourillon sont formées une canalisation axiale pour lubrifiant (33) ainsi que des canalisations radiales pour lubrifiant (34) connectées à la canalisation axiale, les canalisations axiales aboutissant aux enceintes pour lubrifiant.
